# EUROPÄISCHE PATENTANMELDUNG

(11) **EP 4 254 149 A1**
(43) Veröffentlichungstag der Anmeldung: **04.10.2023**
(21) Anmeldenummer: 22165757.0
(22) Anmeldetag: 31.03.2022
(51) Int. Cl.: G06F 3/0354, G06F 3/038

(54) **KORREKTUR EINER BEWEGUNG EINER COMPUTERMAUS**

(71) Anmelder: Siemens Aktiengesellschaft, 80333 München (DE)
(72) Erfinder: Michailow, Nicola, 81825 München (DE); Kornbichler, Andreas, 83623 Dietramszell (DE)
(74) Vertreter: Siemens Patent Attorneys

(57) **Zusammenfassung**

Die Erfindung betrifft ein Verfahren, Vorrichtungen und Computerprogrammproduckte zur Korrektur einer Bewegung einer Computermaus, wobei die Computermaus über einer Ebene bewegbar ist, mit einem Bereitstellen eines ersten Messsignals, das eine Bewegung der Computermaus auf der Ebene wiedergibt, einem Bereitstellen eines zweiten Messsignals, das eine Beschleunigung der Computermaus während der Bewegung der Computermaus und/oder eine Beschleunigung der Ebene während der Bewegung der Computermaus wiedergibt, einem Identifizieren eines Zeitabschnitts des ersten Messsignals zumindest auf Basis des zweiten Messsignals, bei dem eine Bewegung der Computermaus durch eine Bewegung der Ebene beeinflusst wird und einem Bereitstellen eines korrigierten ersten Messsignals für den identifizierten Zeitabschnitt zumindest auf Basis des ersten Messsignals derart, dass die Bewegung der Ebene in dem ersten Messsignal kompensiert wird.

## Beschreibung

Die Erfindung betrifft Verfahren und Vorrichtungen zur Korrektur einer Bewegung einer Computermaus.

Eine Computermaus erfasst eine auf einer Ebene zurückgelegte Wegstrecke und überträgt ein der Wegstrecke charakteristisches Signal an eine Anzeigeeinheit, das beispielsweise einen Cursor auf der Anzeigeeinheit analog zur Wegstrecke bewegt. Hierbei kann eine Skalierung zwischen der Wegstrecke in der Ebene und auf der Anzeigeeinheit vorliegen. Früher wurde die Wegstrecke mit zwei rotatorischen - im 90° Winkel zueinander versetzt in der Computermaus angeordneten - Sensoren erfasst, die mittels einer Kugel bewegt wurden, wobei diese Kugel ihrerseits durch Kontakt mit der Ebene in Bewegung gesetzt wurde. Heutige Computermäuse nutzen ein optisches Signal, das Licht auf die Ebene wirft und bei Bewegung der Computermaus auftretende Lichtveränderungen erfasst und diese einer Bewegung zuordnet.

Nachteilig ist, dass Computermäuse äußerst sensibel auf Bewegungen der Ebene reagieren und diese als Bewegung der Computermaus interpretieren. So ist eine Nutzung der Computermaus in einem Zug kaum praktikabel, weil die Position des Cursors durch die Erschütterungen bei Fahrt des Zuges beeinflusst wird.

Somit besteht eine Aufgabe der Erfindung darin, Verfahren und Vorrichtungen vorzusehen, die eine Zuverlässigkeit einer Nutzung einer Computermaus bei Erschütterungen einer Ebene, auf der die Computermaus bewegt wird, verbessert wird.

Diese Aufgabe wird durch die unabhängigen Ansprüche gelöst. Weiterbildungen der Erfindung sind den abhängigen Ansprüchen zu entnehmen.

Die Erfindung zeigt ein Verfahren zur Korrektur einer Bewegung einer Computermaus, wobei die Computermaus über einer Ebene bewegbar ist, mit folgenden Schritten:
a) Bereitstellen eines ersten Messsignals, das eine Bewegung der Computermaus auf der Ebene wiedergibt;
b) Bereitstellen eines zweiten Messsignals, das eine Beschleunigung der Computermaus während der Bewegung der Computermaus und/oder eine Beschleunigung der Ebene während der Bewegung der Computermaus wiedergibt;
c) Identifizieren eines Zeitabschnitts des ersten Messsignals zumindest auf Basis des zweiten Messsignals, bei dem eine Bewegung der Computermaus durch eine Bewegung der Ebene beeinflusst wird;
d) Bereitstellen eines korrigierten ersten Messsignals für den identifizierten Zeitabschnitt zumindest auf Basis des ersten Messsignals derart, dass die Bewegung der Ebene in dem ersten Messsignal kompensiert wird.

Das Verfahren ermöglicht eine Kompensation von störenden Einflüssen auf die Computermaus aufgrund störender bzw. ungewollter Bewegungen der Ebene. Das Bereitstellen kann durch Messen oder durch Übermittlung einer Messung, beispielsweise von einer Datenbank, erfolgen. Das korrigierte erste Messignal kann nur den Teil des identifizierten Zeitabschnittes betreffen oder das korrigierte erste Messsignal ist eine Kopie des ersten Messsignals mit einer Korrektur des zumindest einen identifizierten Zeitabschnitts. Die Computermaus kann die Bewegung über Reibung mit der Ebene oder durch Aufnahme einer Oberfläche der Ebene ermitteln.

Für das erste und/oder zweite Messsignal wird unter Bereitstellen ein Messen und/oder ein Empfangen von gemessenen Werten des ersten und/oder zweiten Messsignals verstanden. Unter einem Bereitstellen des korrigierten ersten Messsignals wird verstanden, dass das korrigierte erste Messsignal zumindest teilweise dem ersten Messsignal entspricht und zumindest einer der identifizierten Zeitabschnitte des ersten Messsignals durch eine Kompensation der jeweiligen Bewegung der Computermaus erzeugt wird.

In einer alternativen Weiterbildung des Verfahrens können die Messsignale jeweils mittels zumindest eines Werts pro Zeiteinheit wiedergegeben werden. Durch die zeitdiskrete Erfassung der Bewegung und der Beschleunigung kann eine Identifizierung des Zeitabschnittes durch eine Recheneinheit, wie beispielweise einen Microcontroller, in kostengünstiger Art und Weise erfolgen. Durch eine Wahl einer Größe der Zeiteinheit kann eine Auflösung der Messsignale und somit eine Qualität des Verfahrens gegenüber einer Komplexität des Verfahrens gesteuert werden. Je kleiner die Zeiteinheit gewählt wird, desto mehr Werte werden pro Sekunde erfasst, wodurch eine Rechenleistung, d.h. Komplexität, zum Analysieren der Messsignale zum Identifizieren des Zeitabschnittes zunimmt.

Bei einer alternativen Weiterbildung des Verfahrens kann zumindest eie Wert des ersten Messsignals durch Angabe eines Wertepaars aus Richtung und Geschwindigkeit wiedergegeben wird. Dies hat den Vorteil, dass eine genaue Lokalisierung eines Ortes der Computermaus ermöglicht wird. Zudem kann das Verfahren mit Hilfe von standardisierten Modulen und/oder Computermäusen in kostengünstiger Weise realisiert werden.

In einer alternativen Weiterbildung des Verfahrens kann ein zu einem Aufenthaltsort der Computermaus bekanntes Bewegungsprofil ermittelt wird und das Identifizieren des identifizierten Zeitabschnittes und/oder das Bereitstellen des korrigierten ersten Messsignals unter Berücksichtigung des Bewegungsprofils durchgeführt werden. Mit Hilfe dieser Weiterbildung kann ein Identifizieren des Zeitabschnitts verbessert werden.

Im Rahmen der Erfindung werden unter dem Bewegungsprofil ein oder mehrere Informationen verstanden, die typische und/oder erwartete Störungen an dem Aufenthaltsort der Computermaus wiedergeben. Als Aufenthaltsort wird nicht nur eine geografisehe Angabe einer Position nach Längen- und Breitengrad verstanden, sondern auch ein für die Position typisches Fortbewegungsmittel. So wird bei einem Aufenthaltsort, der auf Gleise verweist, angenommen, dass sich die Computermaus in einem Zug befindet. Bei einem Aufenthaltsort, der auf eine Autostraße zeigt, wird angenommen, dass sich die Computermaus in einem Auto befindet. Neben dem Fortbewegungsmittel, das sich anhand des Aufenthaltsorts ermitteln lässt, kann ferner auch ein Bewegungsprofil dem Aufenthaltsort zugeordnet werden, dass für das Bewegungsmittel an dem Aufenthaltsort typisch ist. Bei einem Zug wird eine Geschwindigkeit von bspw. 120km/h angenommen und bei einem Auto auf einer Landstraße eine Geschwindigkeit von 100km/h. Hieraus ergeben sich dann Informationen für typische und/oder erwartbare Bewegungsmuster, das bei der erwarteten Geschwindigkeit mit dem an dem Aufenthaltsort bzw. genutzten Verkehrsmittel als Bewegungsprofil zu erwarten ist. Eine Fahrt mit einem Zug auf Gleise wird andere störende Bewegungsmuster hervorrufen als ein Auto auf einer gepflasterten Straße. Ferner kann der Aufenthaltsort genutzt werden, um in einer Datenbank das Bewegungsprofil für den Aufenthaltsort abzufragen. Beispielsweise können Nutzer, z.B. im Zug, ihre ermittelten Störungen in der Bewegung und/oder Beschleunigung an die Datenbank liefern, die diese Informationen als Bewegungsprofil bei einer Abfrage für den vorgebbaren Aufenthaltsort bereitstellt.

In einer alternativen Weiterbildung des Verfahrens kann das Identifizieren durch zumindest eine der folgenden Vorschriften durchgeführt wird:
a) ein Betrag der Beschleunigung überschreitet einen Maximalwert;
b) der Betrag der Beschleunigung (B) überschreitet den Maximalwert innerhalb eines vorgebbaren, insbesondere zeitlich beschränkten, Zeitfensters zweimal.

Hiermit kann in einfacher Art und Weise das Identifizieren des Zeitabschnitts bewerkstelligt werden. Mit Hilfe des vorgebbaren, insbesondere beschränkten, Zeitfenster kann eine erste Störung in einem ersten Zeitfenster von einer zweiten Störung in einem zum ersten Zeitfenster unterschiedlichen zweiten Zeitfenster unterschieden werden. Dies ist vorteilhaft, weil damit eine Korrektur bzw. Kompensation der Störung verbessert werden kann, da die Kompensation individual pro Störung (lokal) erfolgen kann.

In einer alternativen Ausführungsform des Verfahrens kann der Maximalwert in Abhängigkeit des bekannten Bewegungsprofils eingestellt werden. Hierdurch kann das Identifizieren erheblich erleichtert und in seiner Qualität verbessert werden, weil der Maximalwert an das Bewegungsprofil angepasst werden kann. Ferner kann der Maximalwert über der Zeit auf variieren. Dabei kann durch das Bewegungsprofil angezeigt werden, dass eine Störung eine über der Zeit charakteristische Beschleunigung hervorruft. Somit kann hiermit die Identifizierung des Zeitabschnitts verbessert werden, weil Störungen von nicht-Störungen besser unterschieden werden können.

Bei einer alternativen Weiterbildung des Verfahrens kann das korrigierte erste Messsignal dadurch erzeugt werden, dass zumindest ein Wert für die Bewegung der Computermaus aus dem Wert einer Bewegung der Computermaus zeitlich vor und/oder nach dem identifizierten Zeitabschnitt, insbesondere einem zeitlich vorangegangenen und/oder nachfolgenden Zeitabschnitt des ersten Messsignals , gebildet wird. Dabei kann auch eine Mittelwertbildung aus den zeitlich voran- und nachfolgenden Werte der Bewegung bzw. Zeitabschnitten verwendet werden. Diese Weiterbildungen zeigen den Vorteil, dass mit wenig Rechenaufwand eine hohe Qualität bei einer Korrektur bzw. Kompensation einer erkannten Störung in dem identifizierten Zeitabschnitt in des ersten Messsignals erfolgen kann.

In einer alternativen Weiterbildung des Verfahrens kann durch ein Lernverfahren zum Identifizieren des identifizierten Zeitabschnittes eingesetzt wird, welches die Werte der Messsignale über einen vorgebbaren Zeitraum auswertet und/oder durch ein Lernverfahren zum Bereitstellen des korrigierten ersten Messsignals eingesetzt wird, welches die Werte der Messsignale über einen vorgebbaren Zeitraum auswertet. Der Einsatz eines Lernverfahrens zeigt insbesondere den Vorteil, dass auch Bewegungsmuster, umfassend die Bewegung und/oder Beschleunigung der Computermaus, des Nutzers der Computermaus bei der Identifizierung und/oder Bereitstellung des korrigierten ersten Messsignals berücksichtigt werden können, da das Lernverfahren über der Zeit eine gute Trennung zwischen Störung und keine Störung erlernen kann. Zum Erlernen sind insbesondere Lernverfahren realisiert durch ein neuronales Netz oder durch einen Kalman-Filter von Vorteil.

In einer alternativen Weiterbildung des Verfahrens kann nach Identifizieren des identifizierten Zeitabschnittes eine Dauer der Zeiteinheit, zumindest für eine vorgebbare Zeitdauer, verkürzt werden. Hierdurch kann eine Genauigkeit bei der Ermittlung der Bewegung und/oder Beschleunigung der Computermaus für nachfolgende Analysen zum Identifizieren weiterer Zeitabschnitte verbessert werden. Ein weiterer Vorteil liegt darin begründet, dass eine kürzere Zeitdauer, die mehr Rechenleistung verursacht erst aktiviert wird, wenn ein Zeitabschnitt identifiziert wird - also eine Störung erkannt wurde - und dann nach der vorgebbaren Zeitdauer auch wieder verlängert wird und somit dann weniger Rechenleistung beansprucht. Dies ist insbesondere im Kontext von Computermäusen sehr vorteilhaft, da diese mit Batterien oder Akkus betrieben werden und somit eine Laufzeit ohne Wechsel der Batterie / Akku erhöht werden kann. So kann die Zeiteinheit von 10ms auf 5ms für 10s verkürzt werden.

Das Verfahren kann als computer-implementiertes Verfahren ausgestaltet werden.

Die Erfindung betrifft auch eine Vorrichtung zur Korrektur einer Bewegung einer Computermaus, wobei die Computermaus über einer Ebene bewegbar ist, bei der eine Recheneinheit folgende Schritte implementiert und ausführt:
a) Bereitstellen eines ersten Messsignals, das eine Bewegung der Computermaus auf der Ebene wiedergibt;
b) Bereitstellen eines zweiten Messsignals, das eine Beschleunigung der Computermaus während der Bewegung der Computermaus und/oder eine Beschleunigung der Ebene während der Bewegung der Computermaus wiedergibt;
c) Identifizieren eines Zeitabschnitts des ersten Messsignals zumindest auf Basis des zweiten Messsignals, bei dem eine Bewegung der Computermaus durch eine Bewegung der Ebene beeinflusst wird;
d) Bereitstellen eines korrigierten ersten Messsignals für den identifizierten Zeitabschnitt zumindest auf Basis des ersten Messsignals derart, dass die Bewegung der Ebene in dem ersten Messsignal (M1) kompensiert wird.

In einer alternativen Weiterbildung der Vorrichtung kann die Recheneinheit ferner ausgestaltet sein, einen oder mehrere Schritte gemäß dem Verfahren zu implementieren und auszuführen.

Die Vorrichtung und optional ihre Weiterbildung weist dieselben Vorteile wie das korrespondierende Verfahren auf.

Zum ist Teil der Erfindung ein Computerprogrammprodukt mit Befehlen, welche bei Ausführung durch ein Computersystem das Computersystem dazu veranlasst, ein Verfahren gemäß einem der voranstehenden Schritte durchzuführen, und/oder bei Ausführung durch die Vorrichtung diese dazu veranlassen, ein Verfahren gemäß einem der voranstehenden Schritte durchzuführen.

Das Computerprogrammprodukt dieselben Vorteile wie das korrespondierende Verfahren auf.

Die jeweiligen Weiterbildungen können beliebig kombiniert werden.

Die Erfindung wird anhand von Zeichnungen näher erläutert. Im Einzelnen zeigen:
- Figur 1: Bewegung einer Computermaus entlang einer Wegstrecke auf einer Ebene
- Figur 2: Ein beispielhafter Aufbau einer Computermaus gemäß einer ersten Ausführung der Erfindung
- Figur 3A, 3B: Gegenüberstellung einer Geschwindigkeit und einer Beschleunigung einer Computermaus bei Bewegung entlang einer Wegstrecke ohne Störung
- Figur 4A, 4B: Gegenüberstellung einer Geschwindigkeit und einer Beschleunigung einer Computermaus bei Bewegung entlang einer Wegstrecke und bei Vorliegen Störung
- Figur 5: Alternative Realisierung der Erfindung Verfahren und Vorrichtung unter Berücksichtigung eines Aufenthaltsortes

Elemente mit gleicher Funktion und Wirkung sind in den Figuren mit denselben Bezugszeichen versehen.

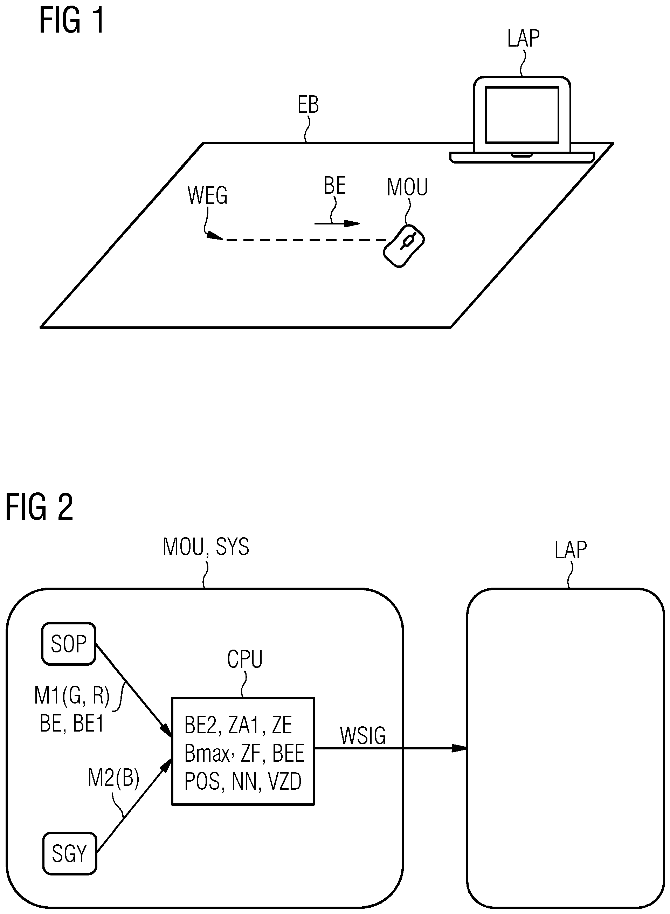

In einem ersten Ausführungsbeispiel gemäß Figuren 1 möchte ein Reisender in einem Zug eine Computermaus MOU zur Bedienung seines Computers LAP verwenden. Eine Bewegung der Computermaus kann auf einem Bildschirm des Computers dargestellt werden, beispielsweise in Form eines Mauszeigers (nicht in Figur 1 dargestellt). Hierzu verfügt die Computermaus über einen Bewegungssensor, der eine Bewegung der Computermaus entlang einer Wegstrecke WEG, siehe Figur 1 gestichelte Strecke, über einer Oberfläche eines Tisches im Zug erfasst. Diese Oberfläche wird im Folgenden auch als Ebene EB bezeichnet. In Figur 1 bewegt der Reisende die Computermaus von links nach rechts, symbolisiert durch den Pfeil für die Bewegung BE BE.

Aus Dokument [1] ist bekannt: "Neuere Mausgenerationen beleuchten die Oberfläche, auf der die Maus bewegt wird, mit einer eingebauten Lichtquelle, beispielsweise mit einer Leuchtdiode, und nehmen die Reflexionen mit einem optischen Sensor auf. Ein eingebauter Mikroprozessor berechnet aus den Unterschieden zwischen nacheinander aufgenommenen Bildern Richtung und Geschwindigkeit der Bewegung der Maus." Somit kann durch den optischen Sensor die Wegstrecke mittels einer Richtungsangabe und einer Bewegungsgeschwindigkeit der Computermaus pro Zeiteinheit ZE, beispielsweise je 10ms, ermittelt werden.

In einem Ausführungsbeispiel der Erfindung gemäß Figur 2 verfügt die Computermaus MOU über einen optischen Bewegungssensor SOP und einen Beschleunigungssensor SGY. Der Bewegungssensor SOP erfasst pro Zeiteinheit die Bewegung BE in Form der Geschwindigkeit G und der (Bewegungs-) Richtung R der Computermaus. Ein erstes Messsignal M1 repräsentiert diese Bewegung als Wert(e) pro Zeiteinheit. Der Beschleunigungssensor SGY erfasst eine jeweilige Trägheitskraft - im Folgenden als Beschleunigung B bezeichnet - der Computermaus pro Zeiteinheit, beispielsweise mittels eines Gyrometers. Das zweite Messignal M2 repräsentiert die Beschleunigung als Wert(e) pro Zeiteinheit. Somit stehen pro Zeiteinheit die Richtung R, die Beschleunigung B und die Geschwindigkeit G zur Verfügung.

Im Ausführungsbeispiel gemäß Figuren 1 und 2 misst der Beschleunigungssensor sowohl die Beschleunigung der Computermaus aufgrund einer Bewegung dieser Computermaus durch einen Nutzer als auch eine durch äußere Kräfte auf die Computermaus wirkende Beschleunigung, beispielsweise ein Ruckeln des Zugs, das sich über eine Bewegung BE1 der Ebene des Tischs auf die Computermaus überträgt. Im vorliegenden Beispiel wird die Bewegung der Computermaus durch den optischen Sensor erfasst, diese Bewegung dann im Sensor durch einen Mikrocontroller in eine Richtung R und Geschwindigkeit G repräsentativ für die Bewegung umgerechnet.

Das erste Messsignal M1 und das zweite Messsignal M2 werden an eine Recheneinheit CPU übertragen. Diese Recheneinheit speichert die Werte der jeweiligen Messsignale M1, M2 in seinem Speicher für eine nachfolgende Analyse. Mit Hilfe eines neuronalen Netzes oder eines Kalman-Filters können die Werte analysiert werden, um in der Bewegung Abweichungen bzw. von einem Erwartungswert und somit Störungen in der Bewegung der Computermaus zu identifizieren.

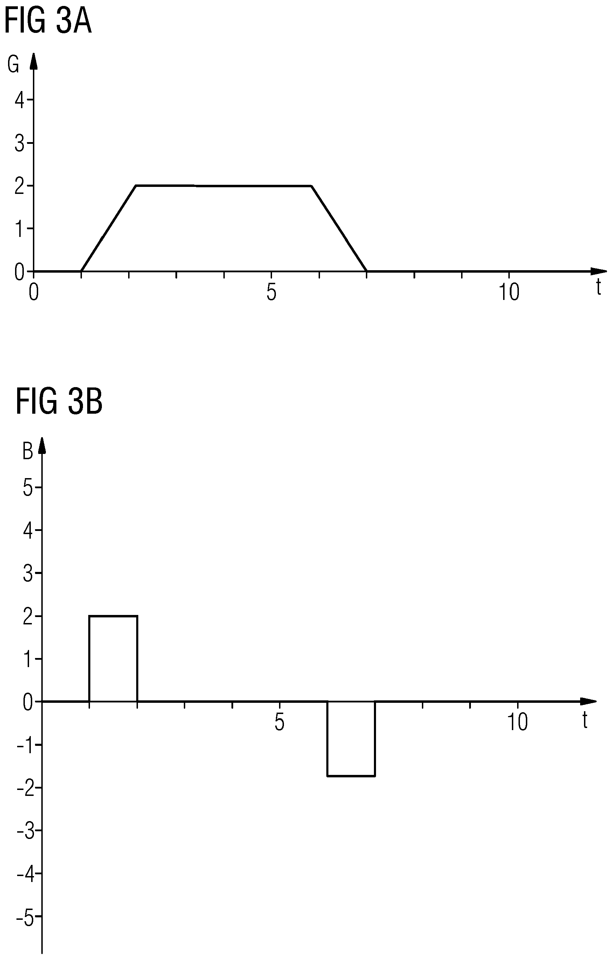

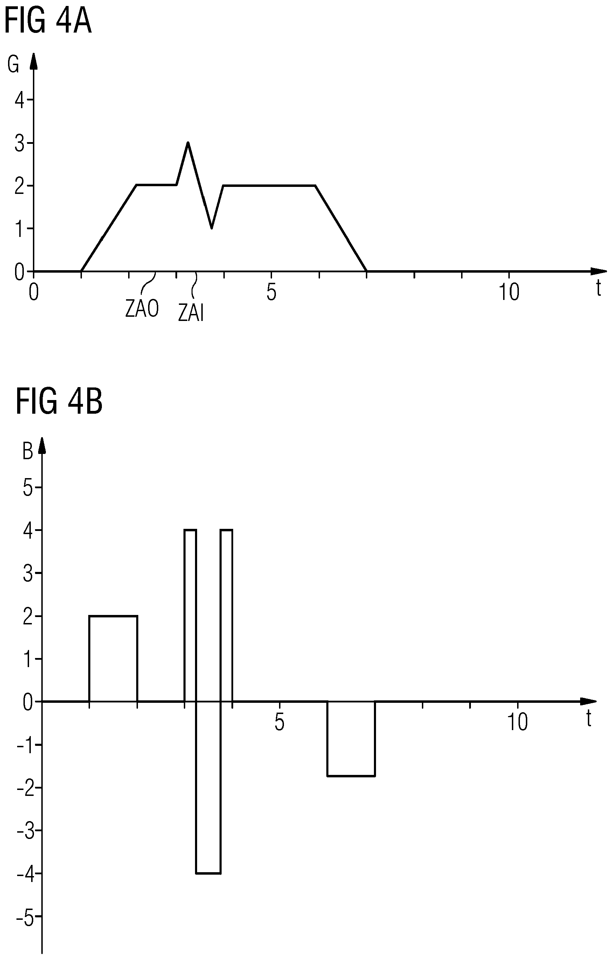

Nachfolgend wird die Analyse anhand der Figuren 3A, 3B, 4A und 4B exemplarisch erläutert. In diesen Figuren werden die Werte pro Zeiteinheit wiedergegeben, wobei diese aufgrund der Auflösung als Linien erscheinen. Für das Beispiel gemäß dieser Figuren wird eine Bewegung der Computermaus in einer festen Richtung angenommen, analog zu Figur 1. Figuren 3A und 3B beschreiben die Geschwindigkeit und die Beschleunigung der Computermaus ohne äußere Einflüsse. In den Figuren 4A und 4B liegt eine Störung durch ein Ruckeln des Zugs vor. In diesem Beispiel wird eine eindimensionale Darstellung gewählt, um den Kern der Erfindung exemplarisch zu erläutern. Jedoch ist die Erfindung nicht hierauf beschränkt. Im Allgemeinen wird die Geschwindigkeit in einem zwei-dimensionalen Raum und die Beschleunigung in einem drei-dimensionalen Raum auftreten und von den Sensoren erfasst.

Figur 3A zeigt beispielhaft für die Bewegung BE der Computermaus in einer Richtung eine Geschwindigkeit G über der Zeit t, wobei die Computermaus zunächst ruht, dann bewegt wird und schlussendlich wieder zum Stillstand kommt. Da die Übergänge von Stillstand zu Bewegung der Computermaus nicht schlagartig, sondern kontinuierlich erfolgt, zeigt sich im Geschwindigkeitsdiagramm der Figur 3A nach t=1s ein Anstieg der Geschwindigkeit G, ab t=2s eine konstante Geschwindigkeit der Computermaus von G=2cm/s und dann ab t=6s ein Abbremsen der Computermaus bis zum Stillstand ab t=7s.

In Figur 3B ist die gemäß dem Bewegungsverhalten bzw. der Geschwindigkeit der Computermaus auftretende Beschleunigung B zu sehen. Zunächst ruht die Computermaus, zwischen den Zeitpunkten t=1s und t=2s findet eine positive konstante Beschleunigung von B=2cm/s², d.h. eine Zunahme der Geschwindigkeit, statt, zwischen den Zeitpunkten t=2s und t=6s tritt keine Beschleunigung auf und zwischen Zeitpunkten t=6s und t=7s eine kontinuierliche Geschwindigkeitsreduktion, dargestellt durch eine negative konstante Beschleunigung von B=-2m/s².

In den Figuren 3A und 3B ist zu sehen, dass keine Störungen von außen auftreten, weil zu Beginn der Bewegung der Computermaus und zum Ende der Bewegung jeweils nur die durch die Bewegung verursachte Beschleunigung zu sehen ist. Auch sind die Werte der Beschleunigung typische Werte für eine manuelle Bewegung der Computermaus durch eine Person, wie z.B. der Betrag der Beschleunigung überschreitet einen Maximialwert von bneispielweise Bmax = 2,5m/s² nicht.

Bei einem störenden Einfluss von außen, beispielsweise durch eine Unebenheit im Gleisbett, tritt eine Störung einer Bewegung der Computermaus aufgrund dieses äußeren Einflusses auf. Hierbei wirken unterschiedliche Bewegungen auf die Ebene und die Computermaus, beispielsweise weil die Computermaus gegenüber der Ebene nicht fest mit dem Zug verbunden ist und ferner die Computermaus eine Trägheit aufweist. Durch die Störung wird die Computermaus bewegt, wobei dies durch den Nutzer nicht beabsichtigt ist. Als Ergebnis zeigt sich auf dem Bildschirm des Computers eine Verschiebung des Cursors, die aber ungewollt ist.

Figur 4A zeigt im Unterscheid zur Figur 3A zwischen t=3s und t=4s eine kurzzeitige Erhöhung der Geschwindigkeit auf G=3cm/s, die danach kurzzeitige Geschwindigkeitsreduktion auf G=1cm/s fällt und dann wieder zu G=2cm/s zurückkehrt. Analog zeigt sich in Figur 4B gegenüber Figur 3B bei t=3s bis t=4s kurzzeitige hohe positive und hohe negative Beschleunigungen mit B=4cm/s² bzw. B=-4cm/s². Bei der Analyse gegenüber einer typischen bzw. zu erwartenden Maximalwert der Beschleunigung Bmax, z.B. Bmax = 3cm/s², zeigt sich, dass der jeweilige Betrag dieser Beschleunigungen zwischen t=3s und t=4s über diesem Maximalwert liegt und somit im Bereich t=3s bis t=4s eine Störung von außen vorliegen muss. Somit wird der Zeitabschnitt bzw. identifizierte Zeitabschnitt ZAI identifiziert bei t=3s bis t=4s. Der identifizierte Zeitabschnitt ZAI zeigt eine ungewollte Bewegung der Computermaus aufgrund einer äußeren Störung auf.

Zur Kompensation der Störung wird in dem identifizierten Zeitabschnitt die Bewegung der Computermaus dahin korrigiert, dass die dazugehörige Geschwindigkeit durch die vor dem identifizierten Zeitabschnitt ZA0 herrschende von G=2cm/s ersetzt wird. Alternativ kann als Geschwindigkeit in dem identifizierten Zeitabschnitt auch ein Mittelwert aus einer jeweiligen Geschwindigkeit vor und nach dem identifizierten Zeitabschnitt gebildet werden. Somit wird ein korrigiertes erstes Messsignal WSIG aus dem ersten Messsignal und aus der Korrektur der Geschwindigkeit in dem identifizierten Zeitabschnitt gebildet.

Das korrigierte erste Messsignal WSIG wird zur Weiterverarbeitung an den Laptop LAP übertragen, wobei auf dessen Bildschirm der Cursor eine Bewegung ohne die durch die Störung verursachte Bewegung der Computermaus wiedergibt.

In dem Ausführungsbeispiel gemäß Figur 4A und 4B wird die Computermaus in einer Richtung auf der Ebene bewegt und die Störung wirkt beispielsweise auch in dieser Richtung. Im Allgemeinen kann die Störung auch in einer anderen Richtung als der Bewegungsrichtung der Computermaus erfolgen. Dabei wird in dem identifizierten Zeitabschnitt neben einer Korrektur der Geschwindigkeit auch eine Korrektur der Richtung der Computermaus erfolgen. So kann in dem identifizierten Zeitabschnitt die Richtung durch eine korrigierte Richtung korrigiert werden, die jeweils zeitlich vor und/oder nach dem identifizierten Zeitabschnitt auf die Computermaus gewirkt hat.

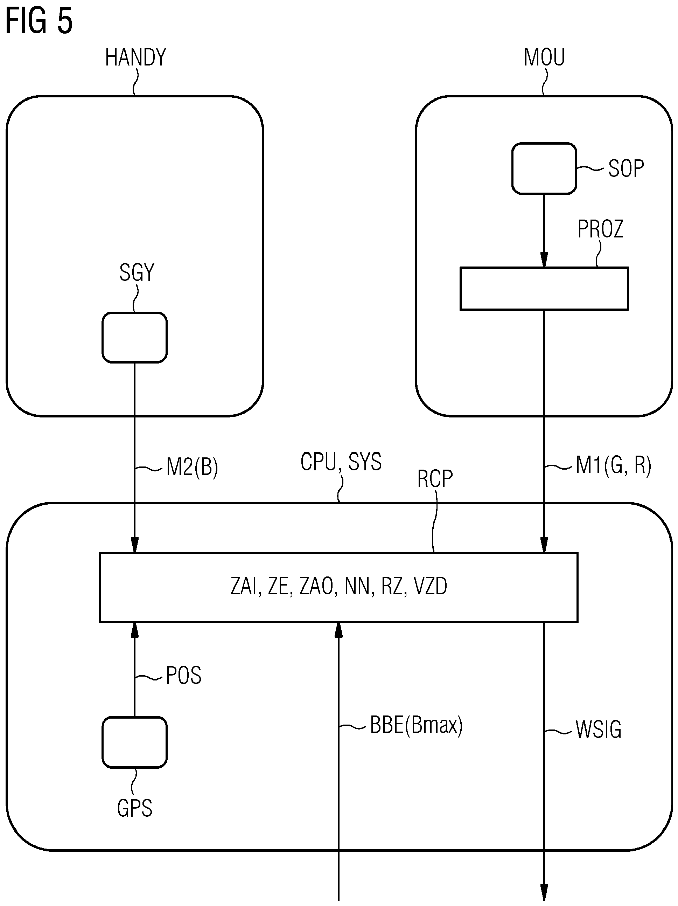

Figur 5 zeigt ein weiteres Ausführungsbeispiel der Erfindung. Hierbei übermittelt die Computermaus MOU sein erstes Messsignal M1 aufweisend die Geschwindigkeit G und die Richtung R pro Zeiteinheit an eine Recheneinheit CPU. Ein Smartphone HANDY überträgt pro Zeiteinheit die Beschleunigung B. Das Smartphone liegt auf der Ebene EB, auf der die Computermaus bewegt wird und ermittelt eine Beschleunigung der Ebene. Das Smartphone überträgt die Beschleunigung B mittels des zweiten Messsignals M2 an die Recheneinheit CPU. Die Übermittlung der Messsignal kann über Bluetooth-Protokoll, WLAN (WLAN- Wireless Local Area Network) Ptrotokoll oder Infrarot-Protokoll erfolgen.

Die Recheneinheit verfügt über eine Ortbestimmungseinheit GPS, mit dem ein Aufenthaltsort POS der Computermaus bestimmbar ist. Diese Ortsbestimmungseinheit arbeitet bspw. nach einem Verfahren Global Position System GPS. Mittels der Position ist die Recheneinheit in der Lage ein für den Aufenthaltsort typisches Bewegungsprofil BBE zu ermitteln. Das Bewegungsprofil teilt mit, welche Störungen an dem aktuellen Aufenthaltsort zu erwarten sind. Ein Bewegungsprofil in einem Zug unterscheidet sich von dem in einem Flugzeug oder von dem in einem Auto. Im vorliegenden Beispiel kann über den Aufenthaltsort bestimmt werden, dass sich der Benutzer der Computermaus in einem Zug befindet. Hierzu wird der Recheneinheit als Bewegungsmuster ein für den Zug typischer Maximalwert Bmax der Beschleunigung B übermittelt, beispielsweise Bmax = 3,5ms². Das Bewegungsmuster wird von einer Datenbank in einer Cloud (nicht gezeigt in Figur 5) auf Anfrage der Recheneinheit übermittelt.

In einer Verarbeitungseinheit RCP der Recheneinheit CPU werden die verschiedenen Informationen, wie erstes und zweites Messsignal, Bewegungsprofil erfasst und analysiert. Beträgt die Beschleunigung des zweites Messsignal mindestens den Maximalwert Bmax, so wird der Zeitabschnitt identifiziert und das erste Messsignal im identifizierten Zeitabschnitt korrigiert. Das korrigierte erste Messsignal wird nachfolgend auf Basis des ersten Messsignals und der Analyse des zweiten Messsignals bereitgestellt. Die Verarbeitungseinheit wird durch ein Lernverfahren realisiert, welches auf Basis eines neuronalen Netzes oder eines Kalman-Filters arbeitet.

Nach dem Identifizieren des identifizierten Zeitabschnittes ZAI kann eine Dauer der Zeiteinheit, zumindest für eine vorgebbare Zeitdauer (VZD), verkürzt werden. In Figur 4 ist die Zeiteinheit beispielsweise mit 10ms gewählt worden, wobei die Länge des Zeitabschnitts zu 1s gewählt worden ist. Nach dem Identifizieren wird die Zeiteinheit, also in der für die Bewegung und die Beschleunigung zumindest ein Wert erfasst wird, von ZE=10ms auf ZE=5ms reduziert, wodurch eine genauere Identifizierung von weiteren Zeitabschnitten ermöglicht wird. Zur Schonung von Batterie der Computermaus wird diese Reduktion auf VZD = 10s beschränkt. Somit wird 10s nach dem identifizierten Zeitabschnitt ZAI die Zeiteinheit wieder auf ZE=10ms gesetzt. In einer alternativen oder zusätzlichen Ausführungsform kann die Reduktion der Zeiteinheit von einer Anzahl an erkannten identifizierten Zeitabschnitten innerhalb eines Zeitbereichs, beispielsweise innerhalb einer Minute, abhängig gemacht werden. Zusätzlich oder alternativ kann die Dauer der Zeiteinheit auch in Abhängigkeit des Bewegungsprofil BBE eingestellt werden. Wird das Bewegungsprofil für einen Zug gewählt, so wird die Zeiteinheit ZE=10ms gewählt, bei dem Bewegungsprofil für einen Tisch in einer Universität wird als Zeiteinheit ZE=20ms und für ein Bewegungsprofil, das eine Fahrt über eine holprige Landstraße repräsentiert, wird die Zeiteinheit zu ZE=5ms gesetzt. Somit kann im Allgemeinen die Dauer der Zeiteinheit daran angepasst werden, ob sich die Computermaus an einem Aufenthaltsort befindet, der mehr Störungen erwarten lässt, z.B. im Auto, als an einem Ort, der weniger Störungen erwarten lässt, z.B. der Tisch in der Universität. Das Bewegungsprofil repräsentiert die zu erwartenden Störungen, wodurch sich die Dauer der Zeiteinheit ermitteln lässt oder diese direkt in dem Bewegungsprofil beispielsweise als eigenes Feld enthalten ist.

In Figur 5 findet sich auch eine Realisierung der Erfindung als Vorrichtung SYS wieder. Die Vorrichtung zeigt eine Recheneinheit CPU zur Korrektur einer Bewegung einer Computermausbei der eine Recheneinheit folgende Schritte implementiert und ausführt:
a) Bereitstellen des ersten Messsignals, das eine Bewegung der Computermaus auf der Ebene wiedergibt;
b) Bereitstellen des zweiten Messsignals, das eine Beschleunigung der Computermaus während der Bewegung der Computermaus und/oder eine Beschleunigung der Ebene während der Bewegung der Computermaus wiedergibt;
c) Identifizieren des Zeitabschnitts des ersten Messsignals zumindest auf Basis des zweiten Messsignals, bei dem eine Bewegung der Computermaus durch eine Bewegung der Ebene beeinflusst wird;
d) Bereitstellen des korrigierten ersten Messsignals für den identifizierten Zeitabschnitt zumindest auf Basis des ersten Messsignals derart, dass die Bewegung der Ebene in dem ersten Messsignal (M1) kompensiert wird.

Im Beispiel gemäß Figur 5 wird das erste Messsignal und das zweite Messsignal der Recheneinheit über ein Funksignal von der Computermaus und dem Smartphone bereitgestellt.

Die Vorrichtung SYS kann in Software, Hardware oder in einer Kombination aus Soft- und Hardware implementiert und realisiert werden. Die Vorrichtung verfügt über eine Recheneinheit mit angeschlossenem Speicher zum Speichern von Werten und Informationen. Zudem weist die Vorrichtung Ein- und Ausgabeeinheiten auf, um mit anderen Einheiten Werte, Signale und Informationen auszutauschen.

In Figur 5 sind die Computermaus und die Vorrichtung als getrennte Einheiten dargestellt. Im Allgemeinen kann die Vorrichtung auch Teil einer Computermaus sein, die die erfinderischen Schritte implementiert und ausführt. In einer alternativen Ausführungsform ist die Vorrichtung Teil eines Treibers eines Computers, der das erste Messsignal von der Computermaus empfängt. Das zweite Messsignal kann von der Computermaus, einem Smartphone oder einem im Computer vorliegenden Beschleunigungssensor der Vorrichtung bereitgestellt werden.

Die jeweilige Ausführungsform der Erfindung kann mit einer oder mehrerer der Ausführungsformen der Beispiele kombiniert werden.

Die Erfindung kann in einem Fortbewegungsmittel, wie Fahrzeug oder Zug, eingesetzt werden. Ferner kann die Erfindung auch im Rahmen von Wartungsarbeiten oder in einem Krankhaus im Rahmen einer Erfassung von Patientendaten eingesetzt werden.

### Literaturangaben

[1] Maus (Computer), siehe https://de.wikipedia.org/wiki/Maus_(Computer)

## Patentansprüche

1. Verfahren zur Korrektur einer Bewegung einer Computermaus (MOU), wobei die Computermaus (MOU) über einer Ebene (EB) bewegbar ist, mit folgenden Schritten:
e) Bereitstellen eines ersten Messsignals (M1), das eine Bewegung (BE) der Computermaus (MOU) auf der Ebene (EB) wiedergibt;
f) Bereitstellen eines zweiten Messsignals (M2), das eine Beschleunigung (B) der Computermaus (MOU) während der Bewegung (BE) der Computermaus (MOU) und/oder eine Beschleunigung (B) der Ebene (EB) während der Bewegung (BE) der Computermaus (MOU) wiedergibt;
g) Identifizieren eines Zeitabschnitts (ZAI) des ersten Messsignals (M1) zumindest auf Basis des zweiten Messsignals (M2), bei dem eine Bewegung (BE1) der Computermaus (MOU) durch eine Bewegung (BE2) der Ebene (EBE) beeinflusst wird;
h) Bereitstellen eines korrigierten ersten Messsignals (WSIG) für den identifizierten Zeitabschnitt (ZAI) zumindest auf Basis des ersten Messsignals (M1) derart, dass die Bewegung (BE2) der Ebene (EB) in dem ersten Messsignal (M1) kompensiert wird.

2. Verfahren nach Anspruch 1, bei dem die Messsignale (M1, M2) jeweils mittels zumindest eines Werts pro Zeiteinheit (ZE) wiedergegeben werden.

3. Verfahren nach Anspruch 1 oder 2, bei dem zumindest ein Wert des ersten Messsignals (M1) durch Angabe eines Wertepaars aus Richtung (R) und Geschwindigkeit (G) wiedergegeben wird.

4. Verfahren nach einem der vorangehenden Ansprüche, bei dem ein zu einem Aufenthaltsort (POS) der Computermaus (MOU) bekanntes Bewegungsprofil (BBE) ermittelt wird und
das Identifizieren des identifizierten Zeitabschnittes (ZAI) und/oder das Bereitstellen des korrigierten ersten Messsignals (WSIG) unter Berücksichtigung des Bewegungsprofils (BBE) durchgeführt wird.

5. Verfahren nach einem der vorangehenden Ansprüche, bei dem das Identifizieren durch zumindest eine der folgenden Vorschriften durchgeführt wird:
a) ein Betrag der Beschleunigung (B) überschreitet einen Maximalwert (Bmax);
b) der Betrag der Beschleunigung (B) überschreitet den Maximalwert (Bmax) innerhalb eines vorgebbaren, insbesondere zeitlich beschränkten, Zeitfensters (ZF) zweimal.

6. Verfahren nach Ansprüchen 4 und 5, bei dem der Maximalwert (Bmax) in Abhängigkeit des bekannten Bewegungsprofils (BBE) eingestellt wird.

7. Verfahren nach einem der vorangehenden Ansprüche, bei dem das korrigierte erste Messsignal (WSIG) dadurch erzeugt wird, dass zumindest ein Wert für die Bewegung (BE1) der Computermaus (MOU) aus dem Wert einer Bewegung der Computermaus (MOU) zeitlich vor und/oder nach dem identifizierten Zeitabschnitt (ZAI), insbesondere einem zeitlich vorangegangenen und/oder nachfolgenden Zeitabschnitt (ZA0) des ersten Messsignals (M1), gebildet wird.

8. Verfahren nach einem der vorangehenden Ansprüche, bei dem durch ein Lernverfahren (NN) zum Identifizieren des identifizierten Zeitabschnittes (ZAI) eingesetzt wird, welches die Werte der Messsignale (M1, M2) über einen vorgebbaren Zeitraum (RZ) auswertet und/oder
durch ein Lernverfahren (NN) zum Bereitstellen des korrigierten ersten Messsignals (WSIG) eingesetzt wird, welches die Werte der Messsignale (M1, M2) über einen vorgebbaren Zeitraum (RZ) auswertet.

9. Verfahren nach Anspruch 8, bei dem
das Lernverfahren (NN) durch ein neuronales Netz oder durch einen Kalman-Filter realisiert wird.

10. Verfahren nach einem der vorangehenden Ansprüche, bei dem nach Identifizieren des identifizierten Zeitabschnittes (ZAI) eine Dauer der Zeiteinheit, zumindest für eine vorgebbare Zeitdauer (VZD), verkürzt wird.

11. Verfahren nach einem der vorangehenden Ansprüche mit Anspruch 2 und 4, bei dem eine Dauer der Zeiteinheit in Abhängigkeit des bekannten Bewegungsprofil (BBE) eingestellt wird.

12. Vorrichtung (SYS) zur Korrektur einer Bewegung einer Computermaus, wobei die Computermaus über einer Ebene (EB) bewegbar ist, bei der eine Recheneinheit (CPU) folgende Schritte implementiert und ausführt:
a) Bereitstellen eines ersten Messsignals (M1), das eine Bewegung (BE) der Computermaus (MOU) auf der Ebene (EB) wiedergibt;
b) Bereitstellen eines zweiten Messsignals (M2), das eine Beschleunigung (B) der Computermaus (MOU) während der Bewegung (BE) der Computermaus (MOU) und/oder eine Beschleunigung (B) der Ebene (EB) während der Bewegung (BE) der Computermaus (MOU) wiedergibt;
c) Identifizieren eines Zeitabschnitts (ZAI) des ersten Messsignals (M1) zumindest auf Basis des zweiten Messsignals (M2), bei dem eine Bewegung (BE1) der Computermaus (MOU) durch eine Bewegung (BE2) der Ebene (EBE) beeinflusst wird;
d) Bereitstellen eines korrigierten ersten Messsignals (WSIG) für den identifizierten Zeitabschnitt (ZAI) zumindest auf Basis des ersten Messsignals (M1) derart, dass die Bewegung (BE2) der Ebene (EB) in dem ersten Messsignal (M1) kompensiert wird.

13. Vorrichtung (SYS) nach Anspruch 12,
bei der die Recheneinheit (CPU) ferner ausgestaltet ist, einen oder mehrere Schritte gemäß Anspruch 1 bis 11 zu implementieren und auszuführen.

14. Computerprogrammprodukt mit Befehlen, welche
- bei Ausführung durch ein Computersystem das Computersystem dazu veranlasst, ein Verfahren gemäß einem der Ansprüche 1 bis 11 durchzuführen, und/oder
- bei Ausführung durch die Vorrichtung (SYS) nach Anspruch 12 oder 13 die Vorrichtung (SYS) dazu veranlassen, ein Verfahren nach einem der Ansprüche 1 bis 11 durchzuführen.
